**Europäisches Patentamt**

**European Patent Office**

**Office européen des brevets**

(19)

(11) Numéro de publication: **0 243 241 B1**

(12) **FASCICULE DE BREVET EUROPEEN**

(45) Date de publication du fascicule du brevet:
07.02.90

(51) Int. Cl.⁴: **B60Q 1/26**

(21) Numéro de dépôt: 87400851.9

(22) Date de dépôt: 14.04.87

(54) **Agencement d'un bloc optique sur un panneau de carrosserie de véhicule.**

(30) Priorité: 25.04.86 FR 8606021

(43) Date de publication de la demande:
28.10.87 Bulletin 87/44

(45) Mention de la délivrance du brevet:
07.02.90 Bulletin 90/6

(84) Etats contractants désignés:
**DE ES GB IT**

(56) Documents cités:
**DE-A- 1 202 155**
**DE-A- 1 480 369**
**DE-U- 1 763 246**
**FR-A- 1 332 047**
**US-A- 2 099 444**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Sentenac, Jean-Pierre, 11, allée des Petits Pains, F-95800 Cergy St. Christophe(FR)**

(74) Mandataire: **Bressand, Georges et al, c/o CABINET LAVOIX 2 Place d'Estienne d'Orves, F-75441 Paris Cédex 09(FR)**

ACTORUM AG

## Description

La présente invention concerne la fixation d'un bloc optique sur un panneau de carrosserie de véhicule automobile.

De tels blocs optiques, notamment pour la signalisation lumineuse arrière des véhicules automobiles, comprennent en général un boîtier contenant au moins une ampoule et ayant une face ouverte recouverte par un diffuseur transparent, ce bloc étant maintenu dans une ouverture du panneau de carrosserie du véhicule par des vis ou des moyens élastiques, tandis que l'étanchéité entre le bloc et le panneau est assurée par un joint souple périphérique.

Ces moyens de liaison sont relativement coûteux et encombrants et ne procurent souvent qu'une étanchéité imparfaite à cause, d'une part, de la distance entre le joint et les points de fixation et, d'autre part, des dispersions dans les dimensions respectives du bloc optique et du panneau de carrosserie.

Le but de l'invention est de proposer un agencement dans lequel soit réalisé de façon simple et avec une très bonne étanchéité le montage d'un bloc optique dans une ouverture d'un panneau.

Etant connu un tel agencement d'un bloc optique sur un panneau de carrosserie délimitant une ouverture dans laquelle est reçu le bloc, ce dernier comprenant un boîtier contenant au moins une ampoule et délimitant une face ouverte, recouverte par un diffuseur transparent, et étant maintenu dans l'ouverture du panneau par des moyens de fixation, avec interposition d'un joint d'étanchéité entre la périphérie du bloc et la partie adjacente du panneau délimitant l'ouverture, l'invention est caractérisée en ce que la fixation du bloc sur le panneau est réalisée par le joint qui comporte une rainure extérieure dans laquelle est reçu un bord du panneau, délimitant l'ouverture, et au moins une rainure intérieure dans laquelle est reçue au moins une collerette périphérique constituée par un rebord périphérique du boitier délimitant sa face ouverte.

L'invention va être décrite plus en détail ci-dessous en se référant aux dessins annexés donnés uniquement à titre d'exemple et sur lesquels :

- la Fig. 1 est une vue en perspective éclatée et avec arrachement illustrant un agencement suivant l'invention;
- la Fig. 2 est une vue en coupe de l'agencement de la Fig. 1, le bloc optique étant monté dans le panneau de carrosserie;
- les Fig. 3, 4 et 5 sont des vues en coupe partielle de variantes.

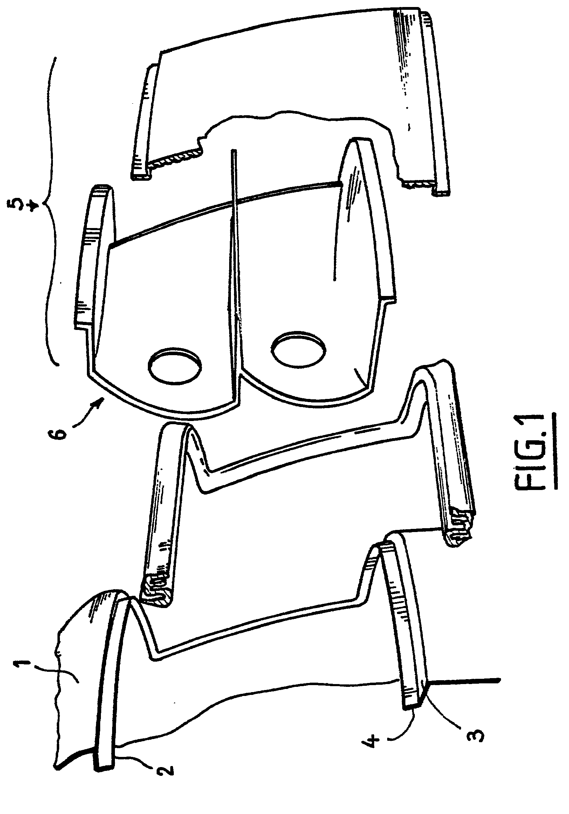

On voit sur la Fig. 1 une partie d'un panneau 1 de carrosserie d'un véhicule automobile, dans lequel est ménagée une ouverture 2. A cet effet, le panneau comporte un décrochement 3 dirigé vers l'intérieur du véhicule et ce décrochement se termine par un rebord 4 dirigé vers l'intérieur de l'ouverture et qui délimite en fait cette dernière.

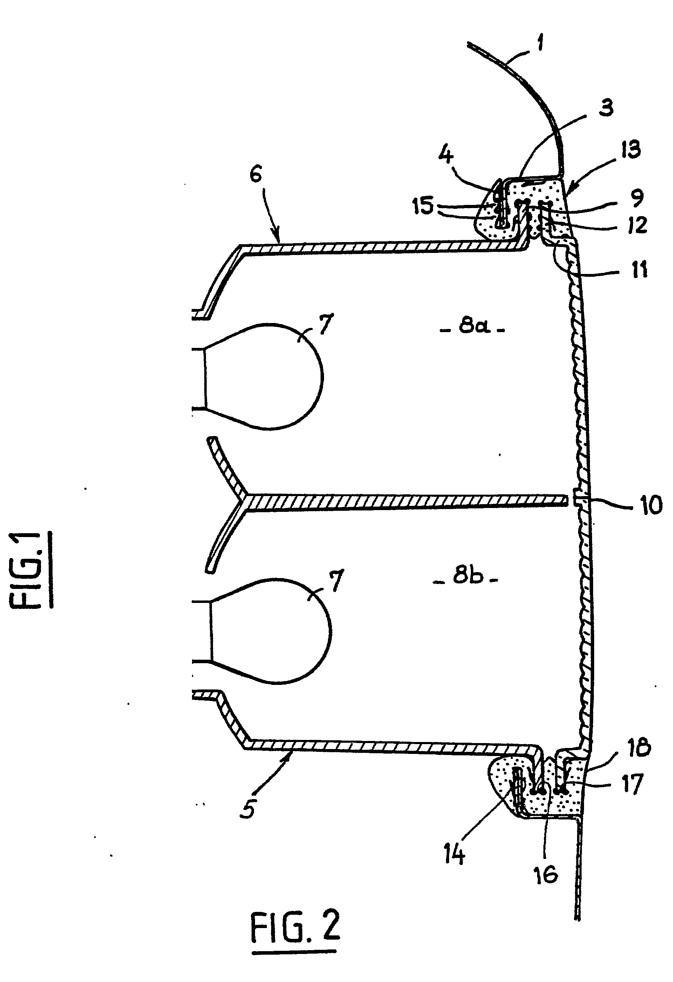

Le bloc optique 5 destiné à être monté sur ce panneau comprend un boîtier 6 pouvant recevoir à sa partie arrière au moins une ampoule 7, comme représenté à la Fig.2. Dans l'exemple représenté, ce boîtier est divisé en au moins deux compartiments 8a, 8b, et il est muni à sa périphérie d'une collerette 9 qui délimite la face ouverte du boîtier, destinée à être recouverte par un diffuseur transparent 10. Ce diffuseur comporte à sa périphérie un décrochement 11 dirigé vers le boîtier et une collerette 12 s'étendant vers l'extérieur.

L'ensemble du bloc optique est monté et maintenu sur le panneau de carrosserie au moyen d'un joint d'étanchéité 13 disposé entre la périphérie du bloc et la partie adjacente du panneau délimitant l'ouverture. La forme de ce joint en section transversale apparaît plus clairement sur la Fig. 2. Il comporte une rainure extérieure 14 dont les parois comportent de préférence des lèvres 15, et dans laquelle s'engage le rebord 4 délimitant l'ouverture 2. Ce joint comporte également dans le mode de réalisation des Fig. 1 et 2 deux rainures intérieures 16, 17 dans lesquelles sont engagées respectivement la collerette 9 du boîtier et la collerette 12 du diffuseur.

Comme on le voit sur la Fig. 2, les dimensions du joint et du décrochement prévu dans le panneau, sont telles que la surface extérieure 18 de ce joint affleure les surfaces adjacentes du panneau et du diffuseur.

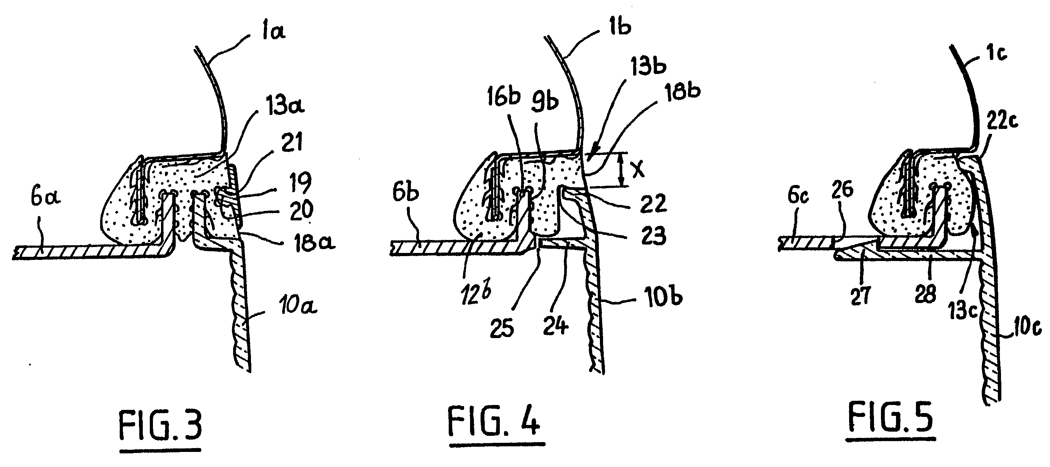

La variante de la Fig. 3 ne diffère du mode de réalisation de la Fig. 2 que par la présence d'un jonc enjoliveur 19 fixé sur la face extérieure du joint d'étanchéité 13a, par exemple par enclenchement élastique d'une nervure 20 de ce jonc dans une rainure 21 ménagée dans le joint.

Dans le mode de réalisation de la Fig. 4, le mode de liaison entre le panneau 1b, le joint 12b et le boîtier 6b est inchangé. Par contre, le joint ne comporte qu'une seule rainure intérieure 16b destinée à recevoir la collerette 9b du boîtier, et le diffuseur 10b comporte un bord périphérique 22 qui est reçu dans un logement 23 du joint. Il comporte également à une faible distance de ce bord périphérique, une nervure 24 disposée en face de la paroi du boîtier, la liaison entre le diffuseur et ce boîtier étant réalisée par soudure en 25.

Bien entendu, l'épaisseur de la portion 18b du joint d'étanchéité comprise entre le bord périphérique 22 du diffuseur et la partie adjacente du panneau, représentée par la cote $x$ sur la Fig. 4, peut être choisi à volonté et ramenée à une valeur très faible.

Dans le mode de réalisation de la Fig. 5, le mode de liaison entre le diffuseur 10c et le boîtier 6c est encore différent : le boîtier 6c comporte des lumières 26 dans lesquelles peuvent s'engager les extrémités en forme de crochets 27 de languettes élastiques 28 venues de matière avec le diffuseur et s'étendant vers l'intérieur du bloc.

De plus, dans cette réalisation, le bord 22c du diffuseur vient simplement en appui sur la face extérieure du joint d'étanchéité et ce même bord est très proche de la partie adjacente du panneau.

Dans ses diverses réalisations, d'ailleurs non limitatives, l'agencement que l'on vient de décrire permet de résoudre de façon efficace le problème posé. En effet, le fait d'utiliser le joint d'étanchéité comme organe unique de maintien du bloc par rapport au panneau évite l'inconvénient résultant de la distance entre les moyens de fixation et le joint et apporte une simplification. La présence d'organes de fixation distincts tels que des vis ou autres est évitée. Les opérations de montage s'en trouvent également facilitées puisque le bloc optique peut être entièrement préassemblé et monté sur la carrosserie en une seule opération. L'étanchéité est de plus assurée de façon efficace malgré d'éventuelles dispersions dans les dimensions des différents composants.

Enfin, les moyens assurant le maintien du diffuseur sur le boîtier et de l'ensemble du bloc optique sur le panneau de carrosserie adjacent sont, dans tous les modes de réalisation, disposés au voisinage immédiat les uns des autres, ce qui est également avantageux.

**Revendications**

1 - Agencement d'un bloc optique (5) sur un panneau (1; 1a; 1b; 1c) de carrosserie de véhicule délimitant une ouverture (2) dans laquelle le bloc est reçu avec interposition d'un joint d'étanchéité (13) entre la périphérie du bloc et la partie adjacente du panneau, ledit bloc optique (5) comprenant un boîtier (6) contenant au moins une ampoule (7) et délimitant une face ouverte, recouverte par un diffuseur transparent (10), des moyens de fixation du bloc sur le panneau étant prévus, caractérisé en ce que le joint d'étanchéité (13; 13a; 13b; 13c) constitue le moyen de fixation du bloc optique (5) sur le panneau (1) et comporte une rainure extérieure (14) dans laquelle est reçu un bord (4) du panneau, délimitant l'ouverture (2), et au moins une rainure intérieure (16; 16b) dans laquelle est reçue au moins une première collerette périphérique (9; 9b), constituée par un rebord périphérique du boîtier délimitant sa face ouverte.

2 - Agencement suivant la revendication 1, caractérisé en ce qu'une deuxième collerette périphérique (12) constituée par un rebord périphérique du diffuseur (10) est reçue dans une deuxième rainure intérieure (17) du joint (13).

3 - Agencement suivant l'une quelconque des revendications 1 ou 2, caractérisé en ce que le joint d'étanchéité porte sur sa face extérieure un jonc enjoliveur (19).

4 - Agencement suivant la revendication 1, caractérisé en ce que le diffuseur (10b) est rendu solidaire du boîtier (6b) par soudure (en 25).

5 - Agencement suivant la revendication 1, caractérisé en ce que le diffuseur (10c) est rendu solidaire du boîtier (6c) par des languettes élastiques (28) dont les extrémités (27) en forme de crochet coopèrent avec des lumières (26) ménagées dans le boîtier.

6 - Agencement suivant l'une quelconque des revendications 1 à 5, caractérisé en ce que le joint comporte une portion (18; 18a; 18b) comprise entre le bord périphérique (22) du diffuseur (10; 10a; 10b) et la partie adjacente du panneau (1; 1a; 1b).

7 - Agencement suivant l'une quelconque des revendications 1 à 5, caractérisé en ce que le bord périphérique (22c) du diffuseur est en appui contre la face extérieure du joint d'étanchéité et très proche de la partie adjacente du panneau (1c).

**Claims**

1. Arrangement of an optical block (5) on a body panel (1, 1a, 1b, 1c) defining an opening (2) in which the block is received, the latter having a case (6) containing at least one bulb (7) and defining an open face, covered by a transparent diffuser (10) and being maintained in the opening of the panel by fixing means, with the interposing of a packing (13) between the periphery of the block (5) and the adjacent part of the panel defining the opening, characterized in that the block (5) is fixed to the panel (1) by the packing (13, 13a, 13b, 13c), which has an external groove (14) in which is received one edge (4) of the panel, defining the opening (2) and at least one internal groove (16, 16b) in which is received at least one peripheral collar (9, 9b) constituted by a peripheral flange of the box defining its open face.

2. Arrangement according to claim 1, characterized in that a second peripheral collar (12) constituted by a peripheral flange of diffuser (10) is received in a second internal groove (17) of packing (13).

3. Arrangement according to either of the claims 1 and 2, characterized in that the outer face of the packing carries an embellishment member (19).

4. Arrangement according to claim 1, characterized in that the diffuser (10b) is joined to case (6b) by welding (at 25).

5. Arrangement according to claim 1, characterized in that the diffuser (10c) is joined to the case (6c) by elastic tongues (28), whose hook-shaped ends (27) cooperate with openings (26) formed in the case.

6. Arrangement according to any one of the claims 1 to 5, characterized in that the packing has a portion (18, 18a, 18b) between the peripheral edge (22) of the diffuser (10, 10a, 10b) and the adjacent part of the panel (1, 1a, 1b).

7. Arrangement according to any one of the claims 1 to 5, characterized in that the peripheral edge (22c) of the diffuser bears against the outer face of the packing and is very close to the adjacent part of the panel (1c).

**Patentansprüche**

1. Anordnung eines optischen Blocks (5) auf einem Kraftfahrzeug-Karosserieblech (1, 1a, 1b, 1c) mit einer Öffnung (2), die den Block aufnimmt, wobei zwischen dem Umfang des Blocks und dem angrenzenden Teil des Blechs eine Dichtung (13) eingesetzt ist, wobei der optische Block (5) ein mindestens eine Lampe (7) enthaltendes Gehäuse (6) mit einer offenen Seite besitzt, die durch eine transparente Streuscheibe (10) abgedeckt ist, und Einrichtungen zur Befestigung des Blocks an dem Blech vorgesehen sind, dadurch gekennzeichnet, daß die Dichtung (13, 13a, 13b, 13c) die Einrichtung zur Befestigung des optischen Blocks (5) an dem Blech (1) bildet und eine Außennut (14), die einen Rand (4) des die Öffnung (2) abgrenzenden Blechs aufnimmt, und mindestens eine Innennut (16, 16b) besitzt, die mindestens einen ersten Flansch (9, 9b) aufnimmt, der aus dem umgebogenen Umfangsrand des Gehäuses, der dessen offene Seite abgrenzt, besteht.

2. Anordnung nach Anspruch 1, dadurch gekennzeichnet, daß ein zweiter Flansch (12), der von dem umgebogenen Umfangsrand der Streuscheibe (10) gebildet ist, von einer zweiten Innennut (17) der Richtung (13) aufgenommen ist.

3. Anordnung nach einem der vorhergehenden Ansprüche, dadurch gekennzeichnet, daß die Dichtung auf ihrer Außenfläche einen Zierring (19) trägt.

4. Anordnung nach Anspruch 1, dadurch gekennzeichnet, daß die Streuscheibe (10b) an dem Gehäuse (6b) durch Verschweißung (bei 25) befestigt ist.

5. Anordnung nach Anspruch 1, dadurch gekennzeichnet, daß die Streuscheibe (10c) an dem Gehäuse (6c) durch elastische Zungen (28) befestigt ist, deren hakenförmige Enden (27) mit in dem Gehäuse vorgesehenen Öffnungen (26) zusammenwirken.

6. Anordnung nach einem der vorhergehenden Ansprüche, dadurch gekennzeichnet, daß die Dichtung einen Teil (18, 18a, 18b) besitzt, der zwischen dem Umfangsrand (22) der Streuscheibe (10, 10a, 10b) und dem angrenzenden Teil des Blechs (1, 1a, 1b) angeordnet ist.

7. Anordnung nach einem der Ansprüche 1 bis 5, dadurch gekennzeichnet, daß der Umfangsrand (22c) der Streuscheibe auf der Außenfläche der Dichtung aufliegt und sich ganz nahe bei dem angrenzenden Teil des Blechs (1c) befindet.

FIG.1

EP 0 243 241 B1

FIG.1

FIG. 2

FIG.3

FIG. 4

FIG.5